Europäisches Patentamt

European Patent Office

Office européen des brevets

(11) Publication number: **0 371 166**
**A1**

## (12) EUROPEAN PATENT APPLICATION

(21) Application number: **88119967.3**

(22) Date of filing: **30.11.88**

(51) Int. Cl.⁵: **G06F 3/06, G06F 12/06**

(43) Date of publication of application:
**06.06.90 Bulletin 90/23**

(84) Designated Contracting States:
**DE FR GB IT NL**

(71) Applicant: **International Business Machines Corporation**
**Old Orchard Road**
**Armonk, N.Y. 10504(US)**

(72) Inventor: **Daas, Antonius C.M.**
**Talingstraat 66**
**NL-1531 VL Wormer(NL)**

(74) Representative: **Louet Feisser, Arnold et al**
**Intellectual Property Department IBM**
**Nederland N.V. Watsonweg 2**
**NL-1423 ND Uithoorn(NL)**

(54) **Disk storage device simulating memory module.**

(57) Memory module for replacing or extending a magnetic memory device in a computer with at least one free expansion slot, comprising a printed circuit board with an edge connector through which the printed circuit board is connectable to an expansion slot of said computer. The printed circuit board carries a memory circuit composed of one or more integrated circuits and an input/output circuit through which the memory circuit is able to communicate with the expansion bus of the computer. The memory circuit comprises at least one program memory circuit for storing at least one sofware routine by means of which the input/output circuit is controlled such that during operation, viewed from the computer side, the memory module behaves like a disk storage device.

fig-1

## Disk storage device simulating memory module.

The invention relates to a memory module for replacing or extending a magnetic memory device in a computer with at least one free expansion slot, comprising a printed circuit board with an edge connector through which the printed circuit board is connectable to an expansion slot of said computer, said printed circuit board carrying a memory circuit composed of one or more integrated circuits and an input/output circuit through which the memory circuit is able to communicate with the expansion bus of said computer.

In a production environment where continuous monitoring of production processes is required, personal computers have been used for several years.

A problem in such an environment is that log data may be lost if a power break or a reset takes place. This may imply that a whole production process must be restarted.

Another problem which occurs with continuous process control is the limited lifetime of diskettes of the conventional type. They degrade rapidly and therefore have to be replaced frequently, which implies copying of data sets each time a diskette is replaced.

Increasing numbers of personal computers are equipped with a fixed disk for storing programs and data. Especially, if large quantities of data have to be handled, such as in production processes, the use of a relative fast accessible fixed disk with a capacity of 10 MB, 20 MB or even more is considered an adantage. A problem with fixed disks, especially in production process environments is, that vibrations or shocks, dust, humidity etc. offer serious hazards for damage of the storage disk.

Industry has already recognized these problems and is searching for adequate solutions. A memory module of the type mentioned in the first paragraph for instance is commercially offered by Curtis Incorporated, St. Paul, Minnesota 55110, U.S.A. These memory modules, marketed under the trademark "Romdisc", are specifically intended to simulate a diskette memory. The memory module occupies the input/output means for one diskette and therefore limits or prevents the normal diskette use. The flexibility in varying the storage size is limited and is in fact dictated by the operating system of the computer. Moreover, the production costs are expected to be rather high.

Because of these reasons there still is a growing need for a memory module without any moving parts suitable to take over or extend the function of the hard disk in a personal computer. The object of the invention is now to provide such a storage medium.

In agreement with said object the invention provides a memory module for replacing or extending a magnetic memory device in a computer with at least one free expansion slot, comprising a printed circuit board with an edge connector through which the printed circuit board is connectable to an expansion slot of said computer, said printed circuit board carrying a memory circuit composed of one or more integrated circuits and an input/output circuit through which the memory circuit is able to communicate with the expansion bus of said computer, characterized in that the memory circuit comprises at least one program memory circuit for storing at least one software routine by means of which the input/output circuit is controlled such that during operation, viewed from the computer side, the memory module behaves like a disk storage device.

The invention will now be explained in more detail with reference to the attached drawings.

Figure 1 illustrates in a schematical way a memory module according to the invention.

Figure 2 is a more detailed block diagram of an electronic circuit for implementing the memory module according to the invention.

Figure 3 is a memory map relating to the memory module.

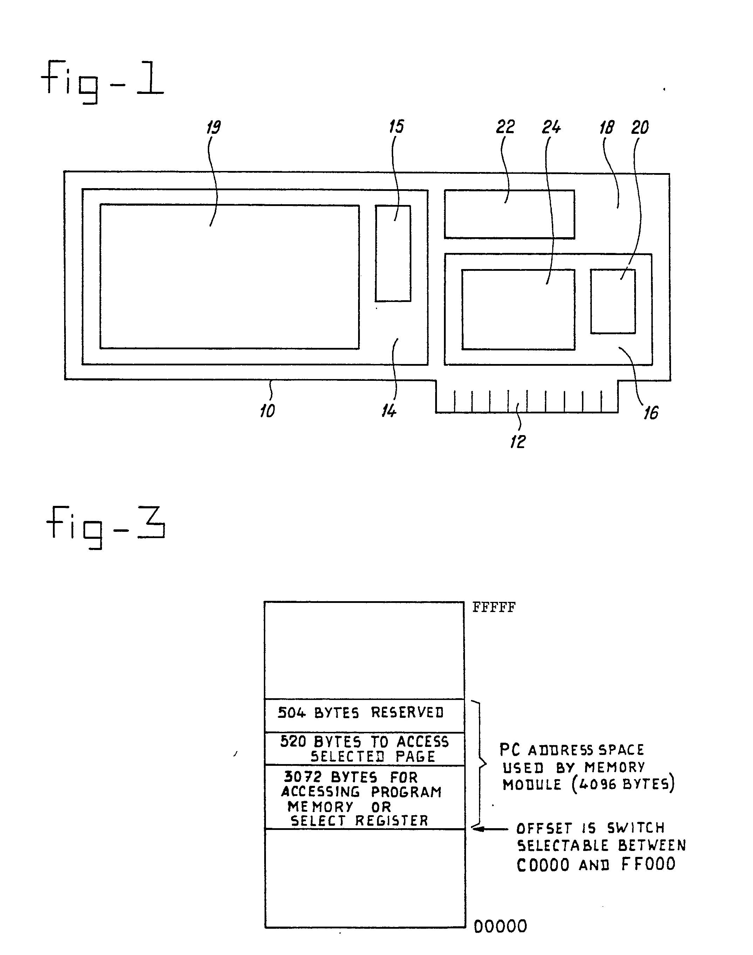

Figure 1 illustrates in a very schematic way the memory module 10 according to the invention comprising the actual memory circuit 14, a program memory 22 and a logic interface 16. The module is implemented on a printed circuit board 18 with edge connector 12 to insert the whole module into an available expansion slot of a personal computer.

The memory circuit 14 is composed of random access memory (RAM) 19 logically arranged into a large number of memory pages, each page comprising a predetermined memory address space. The memory circuit furthermore comprises a page select register 15 by means of which a particular memory page can be made accessible by writing its page number into this register. The RAM-memory 19 is composed of one or more memory integrated circuits (ICs) such as commercially available static memory ICs with standard connections. The total number of memory pages is dependent on the memory capacity of each memory IC and the quantity of memory ICs used.

The program memory 22 contains suitable program routines to allow the memory module 10 to behave as a regular disk storage device when executed by the processor of the PC and behaves conform the rules for extending the basic input/output operating system (BIOS) of the PC.

The disk size reflected to the user by these routines depends on the total number of available memory pages.

The communication between the expansion slot bus connection 12 and both the memory circuit 14 and program memory 22 is handled by the logic interface 16 comprising a suitable number of decoder/driver circuits 24. It furthermore comprises a number of switches 20 by means of which the user is able to define the offset address of the memory module in the personal computers memory address space. This permits usage in combination with a regular disk adapter or usage of more than one memory module. The module as a whole is totally passive and only uses memory address space and no I/O address space. It does not use hardware interrupts nor does it use direct memory access (DMA).

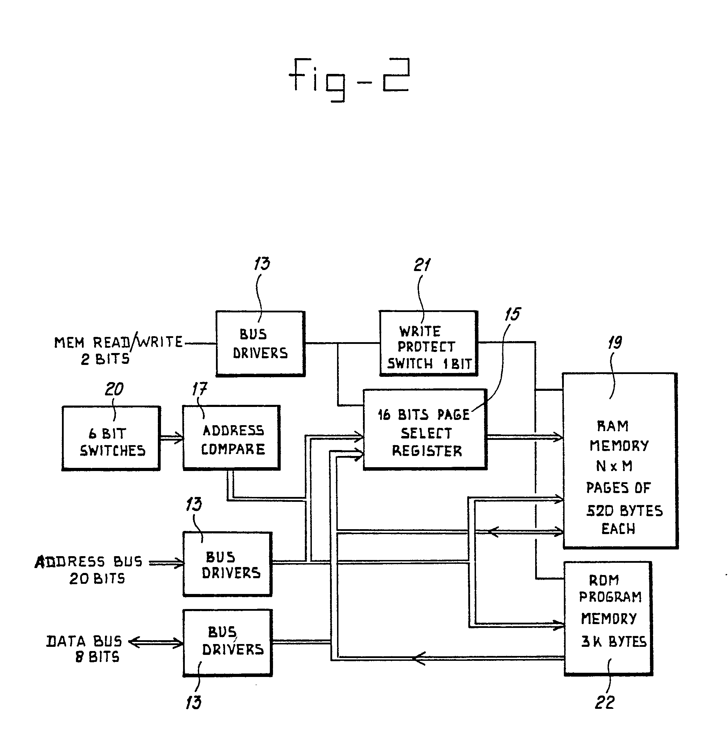

A more detailed embodiment of the memory module according to the invention is illustrated in figure 2 with its memory map in figure 3.

In this embodiment the total memory module occupies a PC memory address space of 4K bytes at an offset in the range of COOOO to FFOOO to be defined by the switches 20. The lower 3K bytes in this address space are used for accessing the program memory 22 on read access and the page select register 15 on write access, while the next 520 bytes are used to access the selected page in RAM 19. The remaining 504 bytes are reserved and may not be used.

The logic interface 16 in this embodiment comprises besides the required bus drivers 13 an address compare circuit 17 which will together with switches 20 control proper addressing of program memory (22), RAM (19) and the page select register (15). The switch 21 features write protection of RAM.

The memory circuit 14 in this embodiment is composed of 2 to 17 static memory ICs of 8K, 32K or 128K bytes making up RAM 19 and a 16 bit page select register 15. RAM is logically organized as a matrix of N x M pages of 520 bytes, where N is the number of memory ICs -1 installed by the user and M is the number of pages per memory IC (16, 64 or 256) which depends on the individual memory IC size chosen by the user. Page selection is performed by writing a word containing numbers in the range of N and M into the page select register.

The program memory 22, which in this embodiment is implemented as read only memory (ROM), contains 3 routines and a set of parameter tables. These routines should be executed by the PCs Intel-8088 (or code compatible) processor to gain access to the memory module. These routines behave to the user functionally the same as the routines for the regular disk adapter.

The first routine is a disk service software interrupt routine. All necessary services are performed such as read, write, format, etc. In this embodiment each track contains 16 sectors of 512 bytes each. The memory IC that will be accessed in this routine corresponds to the cylinder number and must be in the range of N. The area accessed within the memory IC corresponds to head x 16 + sector and must be in the range of M. The highest accessible cylinder and head are obtained from a parameter table to be initialized before this routine is called.

The second routine is an initial program load (IPL) service software interrupt routine, which may be used by the user to allow IPL from the memory module as well as from diskette. It also resets the diskette parameter table pointer and the disk parameter table pointer to their power-on values.

The third routine is a subroutine to be called at power-on by the PC-BIOS. This routine initializes the software interrupt pointers in the PC to point to the two software interrupt routines. It furthermore determines the highest usable cylinder N and the highest usable head M/16 and initializes a pointer to a disk parameter table that reflects these values.

The layout of a 520 bytes RAM page in this embodiment is as follows:
- The first 512 bytes contain the actual sector data. This data is transferred to or from the user buffer at normal read or write requests to the ROM code.
- The next 4 bytes are reserved for error correcting code (ECC). These bytes are transferred in addition to the 512 sector bytes at long-read and -write requests to the ROM code. This allows for compatibility with a regular disk storage device. For performance reasons, however, this code is neither generated nor checked in the ROM code, as there are only a few maintenance programs that make use of it. - The next 2 bytes contain a 16 bit check-sum, which is used internally by the ROM code for error detection.
- The last 2 bytes contain the page number, which is used internally by the ROM code to check for validity of the page.

Initialization

As with a regular disk storage device, initialization is required if the memory module has never been used or after adding or changing memory ICs. This requires a special program to be executed under the used operating system on the PC (in this embodiment only a MS-DOS program is provided). This program does a format request to ROM code for each possible track, assuming the largest possible disk size (16 cylinders and 16 heads). During this process all RAM pages are validated by placing its page number into the last two bytes of that page. Furthermore all data bytes are initialized with a fill character and a valid checksum. After this the PC is forced to do a restart. When the PC now calls the power-on routine in ROM, this routine will be able to find the highest available RAM page and will set the highest cylinder and head accordingly.

After this initialization all operations required for a regular disk storage device can be performed. Under MS-DOS the user may now complete the installation by running the DOS programs FDISK and FORMAT.

## Claims

1. Memory module for replacing or extending a magnetic memory device in a computer with at least one free expansion slot, comprising a printed circuit board with an edge connector through which the printed circuit board is connectable to an expansion slot of said computer, said printed circuit board carrying a memory circuit composed of one or more integrated circuits and an input/output circuit through which the memory circuit is able to communicate with the expansion bus of said computer, characterized in that the memory circuit comprises at least one program memory circuit for storing at least one sofware routine by means of which the input/output circuit is controlled such that during operation, viewed from the computer side, the memory module behaves like a disk storage device.

2. Memory module according to claim 1, wherein the module can be featured with a variable number of memory integrated circuits of various sizes, which is reflected to the user software in terms of disk dimensions.

3. Memory module according to claim 1, wherein the module comprises means for manually selecting the address space covered by the memory circuit.

4. Memory module according to one of the preceding claims, wherein the module comprises means to switch the module into a read only mode.

5. Memory module according to one of the preceding claims, wherein the module includes a backup battery powering at least the integrated memory circuits during periods in which no power is received from the computer power supply through the expansion slot.

# fig-1

19    15    22  24    18  20

10    14    12    16

# fig-3

FFFFF

| |
|---|
| 504 BYTES RESERVED |
| 520 BYTES TO ACCESS SELECTED PAGE |
| 3072 BYTES FOR ACCESSING PROGRAM MEMORY OR SELECT REGISTER |

PC ADDRESS SPACE USED BY MEMORY MODULE (4096 BYTES)

OFFSET IS SWITCH SELECTABLE BETWEEN C0000 AND FF000

00000

NE9.88.002

# Fig-2

MEM READ/WRITE 2 BITS — **BUS DRIVERS** *13*

**WRITE PROTECT SWITCH 1 BIT** *21*

*15*

*19*

**6 BIT SWITCHES** *20*

**ADDRESS COMPARE** *17*

**16 BITS PAGE SELECT REGISTER** *15*

**RAM MEMORY N x M PAGES OF 520 BYTES EACH** *19*

ADDRESS BUS 20 BITS — **BUS DRIVERS** *13*

DATA BUS 8 BITS — **BUS DRIVERS** *13*

**ROM PROGRAM MEMORY 3 K BYTES** *22*

NE9.88.002

European Patent Office

**EUROPEAN SEARCH REPORT**

Application Number

EP 88 11 9967

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | GB-A-2 172 126 (J.R. MUMFORD) <br> * Figures 1,2; page 3, lines 1-18,29-46,59-86; page 4, lines 67-80,97-118; page 5, lines 54-64 * | 1,2,5 | G 06 F 3/06 <br> G 06 F 12/06 |
| A | | 4 | |
| X | AU-B- 557 723 (K.J. BURKE) <br> * Page 2, line 21 - page 2a, line 4; page 3, line 29 - page 4, line 2; page 4, line 30 - page 5, line 1; page 5, lines 14-22; page 10, lines 1-10; page 19, line 7 - page 20, line 8; figures 1,2; page 33, lines 3-4 * | 1,3,5 | |
| A | | 2 | |
| X | FR-A-2 587 824 (MITSUBISHI) <br> * Page 7, line 24 - page 8, line 15; page 10, lines 23-30; page 10, line 33 - page 11, line 15; figures 1-4 * | 1,5 | |
| A | | 4 | |
| A | US-A-4 617 624 (J.B. GOODMAN) <br> * Figure 4A; column 2, line 47 - column 3, line 16; column 4, lines 26-34; column 6, lines 1-4; column 7, lines 47-50 * | 1-3 | TECHNICAL FIELDS SEARCHED (Int. Cl.5) <br><br> G 06 F 3/06 <br> G 06 F 12/06 |
| A | EP-A-0 085 117 (J. ADAMS) <br> * Figure 1; page 9, lines 1-19,24-28 * | 4,5 | |

The present search report has been drawn up for all claims

| Place of search | Date of completion of the search | Examiner |
|---|---|---|
| THE HAGUE | 31-07-1989 | MOENS R.A.A. |